# EUROPEAN PATENT APPLICATION

(11) **EP 2 291 016 A1**
(43) Date of publication of application: **02.03.2011**
(21) Application number: 09757655.7
(22) Date of filing: 04.06.2009
(51) Int. Cl.: H04W 12/00, H04Q 9/00

(54) **WIRELESS CONTROL SYSTEM USING AN APPARATUS WITH A MOBILE TELEPHONE**

(30) Priority: 05.06.2008 ES 200801691
(71) Applicant: Colaboradores en Tecnologia para la Empresa S.L., 46003 Valencia (ES)
(72) Inventor: MILLET SANCHO, José María, E-46003 Valencia (ES)
(86) International application number: PCT/ES2009/070204
(87) International publication number: WO 2009/147276

(57) **Abstract**

The invention relates to a system that controls the operation of a plurality of devices (8) connected to a controller (6) using an apparatus with a mobile telephone (1). The invention can be used to send special orders (42a) containing information relating to a user management mode; such as user registration or deregistration. The invention can also be used to store, in an apparatus with a mobile telephone (1), orders (42), (42a) coming from another apparatus with a mobile telephone (1) or from a server for managing orders and accesses (10). The invention can further be used to send the aforementioned received orders (42), (42a) to a controller (6) without said orders being stored in the apparatus with a mobile telephone (1). In addition, the order- and access-management server can be used to manage real-time access rights of the orders (42), (42a), as well as to release codes in order to control release rights, for example to charge for same, and to authorized access to the controller prior to the execution of an order.

## Description

### OBJECT OF THE INVENTION

The invention is provided for controlling the operation of a plurality of device from different nature; as is the case of turning on and off electrical household appliances, alarms, etc.; or the operation of adjustable positioning devices such as cranes, cameras, etc., or the operation of parameter reading devices such as light meters, gas meters, etc., for which it stores orders that are sent to a controller which is connected to different devices to be controlled; and which intendeds to allow sending special orders allowing identifying if the user control has or not to be carried out, so that in case that the user control should be performed, registrations or deregistrations in the controller are allowed, allowing regulating the access to the controller and the operation of the devices connected to it.

Another object of the invention is to allow introducing orders in the apparatus with a mobile telephone from a server for managing orders and accesses or from another apparatus with a mobile telephone, so that systems fitters are allowed to introduce control orders of the devices from a user facility or from an apparatus with a mobile telephone owned by the fitter.

Allowing receiving orders in the apparatus with a mobile telephone, which can either, be stored therein or forwarded to a controller without the order being stored in the apparatus with a mobile telephone, is also another object of the invention.

In addition, the server for managing orders and accesses allows managing real-time access rights of the orders, downloading codes in order to control download rights, as can be for example charging for said rights, or allowing doing access and control authorizations of the devices.

### BACKGROUND OF THE INVENTION

The background closest to the invention is constituted by the invention patent No. 200502971, of same holder than the present invention, wherein the operation of different types of devices which are connected to a controller is described from an apparatus with a mobile telephone.

In this document, the user control in the controller is not allowed, as for example it can not be carried out registrations or deregistrations of users.

Furthermore, orders stored in the apparatus with a mobile telephone for carrying out the operation of the devices, are only introduced through the keyboard of the apparatus with a mobile telephone, which limits this functionality. This functionality is extended by the present invention so that the orders can be introduced from another apparatus with a mobile telephone or from a server for managing orders and accesses.

On the other hand, in the mentioned document, apart from not to be allowed to receive orders in the apparatus with a mobile telephone for storing thereof, either is allowed to receive orders that can be forwarded to the controller without being stored in the apparatus with a mobile telephone.

Additionally in the referred document, a distant server having limited functionalities is incorporated, as for example is the case that it does not allow performing the aforementioned functionalities, because it lacks of them.

### DESCRIPTION OF THE INVENTION

In order to overcome and achieve the aforementioned objectives, the invention has developed a new wireless control system using an apparatus with a mobile telephone, which just like the one described in the state of the art forecasts the use of an apparatus with a mobile telephone communicated with a controller which is connected to a plurality of device for operating thereof. For that, the apparatus with a mobile telephone is provided with: a distant communication radiofrequency module, through at least one long-distance communications network; a short-distance communication radiofrequency module for carrying out the communication with at least one controller, for which incorporates a short-distance radiofrequency module; orders storing means containing an identification of a controller, controller key, order name and the action to be carried out by the devices; an module for order interpretation and an order manager module, for allowing a user to select an order and send it together with an identification of the apparatus with a mobile telephone to the controller. The controller is, in turn, provided with module for order extraction which receives different orders and delivers them to a module for order interpretation which accesses to some data storing means and acts upon the devices according to the indicated action.

The main novelty of the invention lies in that the order storing means of the apparatus with a mobile telephone are provided for storing special orders containing information relating to a user management mode associated to each order. Said information indicates whether management without user control, management with user control, user registration management or user deregistration management has to be carried out; the last three management modes being associated to a user identification number; so that the special orders can be sent from the apparatus with a mobile telephone to the controller.

For that the module for order extraction of the controller is connected to a module for controlling special orders which determinates the content information relating to a user management mode and which is further connected to a control memory for storing user number identifiers associated to an identification of an apparatus with a mobile telephone, so when a controller receives an special order, in the case that detects it is with user control or it is a deregistration, verifies if the received user number identifier and identification of the apparatus with a mobile telephone agree with those stored, if so it executes the associated special order, and otherwise communicates it to the apparatus with a mobile telephone indicating the denial of executing the special order. In the case relating to a deregistration, it deletes from the control memory the user number identifier and the identification of the apparatus with a mobile telephone and communicates it to the apparatus with a mobile telephone wherein the deregistration is taken place. And for the case wherein a registration is received, it stores the user number identifier associated to the identification of the apparatus with a mobile telephone and executes the associated order. If when carrying out the storage of the user number identifier, an identification of the apparatus with a mobile telephone already exists, will replace it by the new one so that, problems in changing of the apparatuses with a mobile telephone which can be done by the user, or possible changes of users are in this way avoided.

The invention forecasts that the apparatus with a mobile telephone, apart from receiving orders, can also receive the special orders, through the long-distance communications module in such a way that different orders are associated to an information regarding the forwarding of the received order or the storage of said order in the storing means of the apparatus with a mobile telephone, which are interpreted in the module for order interpretation and based on the interpretation made, directly sends the order to a controller or stores it in the storing means through the order manager module.

The orders received by the apparatus with a mobile telephone through the long-distance communications module can come from another apparatus with a mobile telephone or from a server for managing orders and accesses.

This configuration has the great advantage that allows carrying out the configuration of orders and special orders in an apparatus with a mobile telephone, from another apparatus with a mobile telephone, which can be for example the mobile telephone of a fitter, or also carrying out this function from the server for managing orders and accesses. In order to achieve this functionality, the server for managing orders and accesses comprises a first distant communication radiofrequency module using the long-distance communications network, in order to be communicated with the apparatuses with a mobile telephone and with the controllers; a second distant communication radiofrequency module with a second long-distance communications network to be communicated with a user facility which can be for example, of the fitter; a first order manager for the user to introduce data relating to orders, special orders, a user identification number associated to each order, and indication of whether said data should be stored or forwarded; an orders transmitter which is connected to the first radiofrequency module for sending said data to an apparatus with a mobile telephone or to a controller. Using this configuration allows orders and special orders be prepared for direct sending to the controller or to the apparatus with a mobile telephone, wherein the stored orders can remain stored or be forwarded to the controller without being stored.

In addition, the server for managing orders and accesses comprises a user identifier module which is connected to a memory of registered users; a second orders manager which is connected to an orders memory and to the orders transmitter for requesting a user identification, so that the access to the server for managing orders and accesses is allowed for both non-registered user and registered users, so that in this last case the user identifier module requests a user identification, which upon being received verifies if it is correct, and when receiving the data introduced by the user, stores the information associated to the user identification, and/or sends the information to an apparatus with a mobile telephone or to a controller similarly as it was discussed above.

The second orders manager is provided with means for detecting registration, deregistration, assigning/unassigning the information stored in apparatuses with a mobile telephone, as well as the detection of usage restrictive conditions of said apparatuses with a mobile telephone, which comprise restrictions relating to allowed dates, hours and accesses; all of that in order to allow the creation of orders and special orders allowing carrying out these functionalities in the apparatuses with a mobile telephone.

The server for managing orders and accesses of the invention forecasts incorporating a manager for downloading codes which is connected to a memory of download code and to the first radiofrequency module, for allowing receiving a download code message from an apparatus with a mobile telephone through the communication networks, so that said download code message comprises an order and a download code that when received, the manager for downloading codes verifies that the download code of codes agrees with the one stored, and the orders transmitter sends the order to the apparatus with a mobile telephone, and deletes the checked download code from the download codes memory. In this way, the download rights are controlled in order to, for example, charge for the same.

The server for managing orders and accesses, is further provided with an accesses authorizer which is connected to the first radiofrequency module, to the orders memory and to an accesses memory in order to allow receiving a request from the controller or from the apparatus with a mobile telephone of whether the apparatus with a mobile telephone is authorized to access to the device before executing an order, storing the authorizations/unauthorizations made in the memory of access.

This characteristic is complemented with the fact that the server for managing orders and accesses is further provided with an access finder connected to the second orders manager and to the accesses memory in order to allow a user registered visualizing the stored authorizations/un authorizations through the user facility. This configuration allows checking that the apparatus with a mobile telephone is authorized to execute the order at that time using an apparatus with a mobile telephone or from the controller, transmitting it with the mentioned data to the access authorizer or the server for managing orders and accesses. The user facility can be of any type, for example, a computer whereby the user communicates through the second long-distance communications network with the server for managing orders and accesses.

Next, in order to facilitate a better understanding of this specification and being an integral part thereof, a set of figures wherein the object of the invention bas been represented with an illustrative and non limitative character are attached.

### BRIEF DESCRIPTION OF THE FIGURES

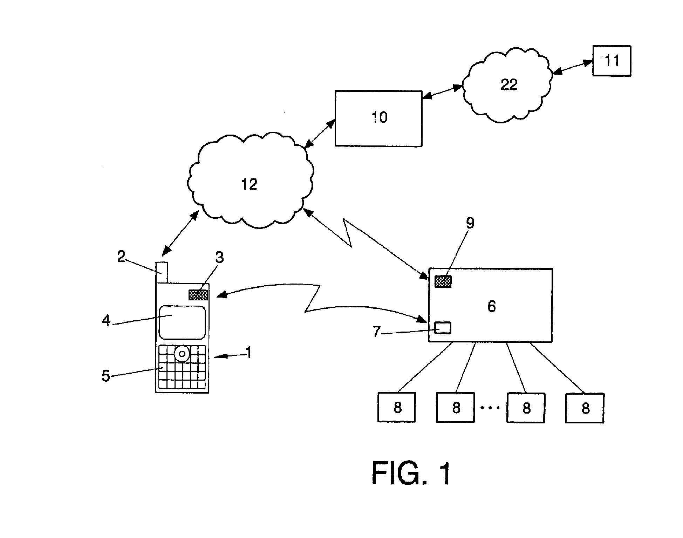

Figure 1. - Shows a schematic block diagram of the configuration of the system of the invention.
Figure 2. - Shows a functional block diagram of the configuration of an apparatus with a mobile telephone.

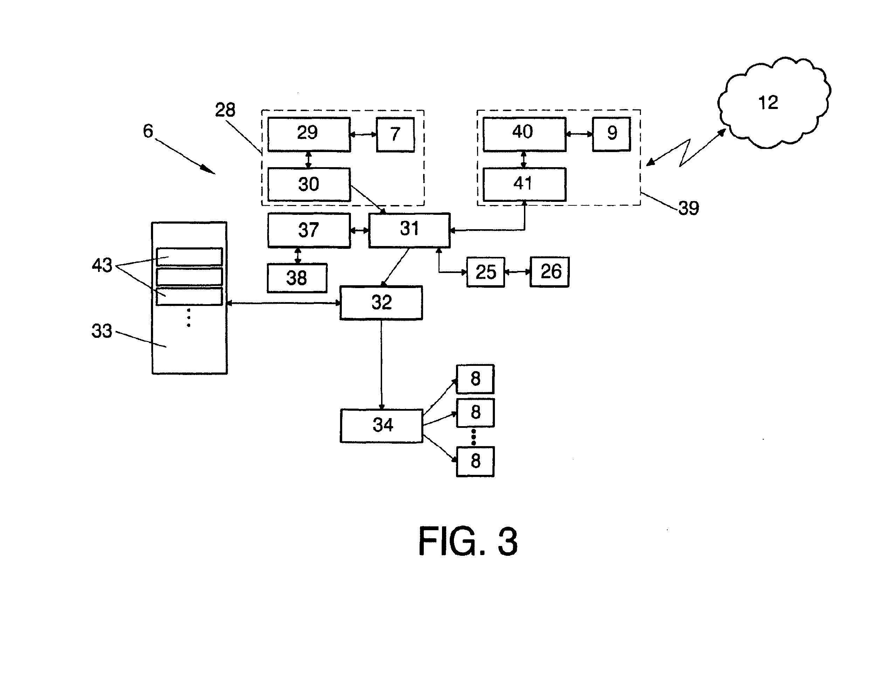

Figure 3. - Shows a functional block diagram of a configuration of the controller configuration of the invention, which is connected to different devices to be operated from the apparatus with a mobile telephone, showed in the previous figure.

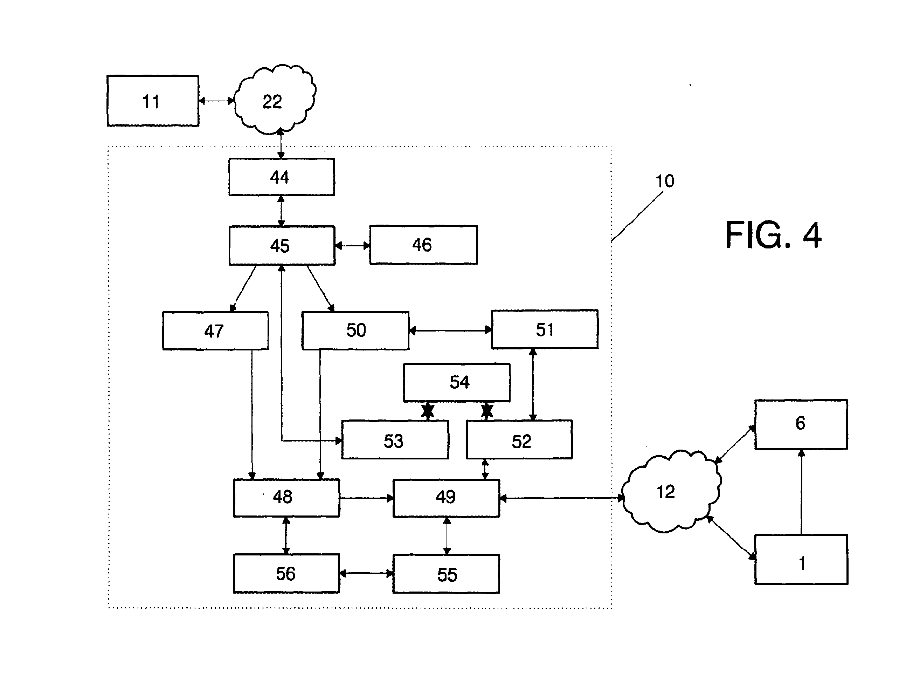

Figure 4. - Shows a functional block diagram of the configuration of the server for managing orders and accesses of the invention.

### DESCRIPTION OF THE PREFERRED EMBODIMENT

Next, a description of the invention based on the aforementioned figures is made.

The invention allows operating a plurality of device 8 from an apparatus with a mobile telephone 1.

For that the invention utilizes the communications means that are conventionally used in the mobile telephones 1, for which it counts on an aerial 2 utilized for the vocal and data long-distance communications using a long-distance communications network 12 as can be, for example, a communications network of the type GPRS, SMS, MMS, etc.

Accordingly, the controller 6 includes an aerial 7, for short-distance communications, with the mobile telephone 1, and further includes an aerial 9 in communication with the network 12. Said network 12 is connected to a server for managing orders and accesses 10. This server 10 is also connected to a user facility 11 using a second communication network 22.

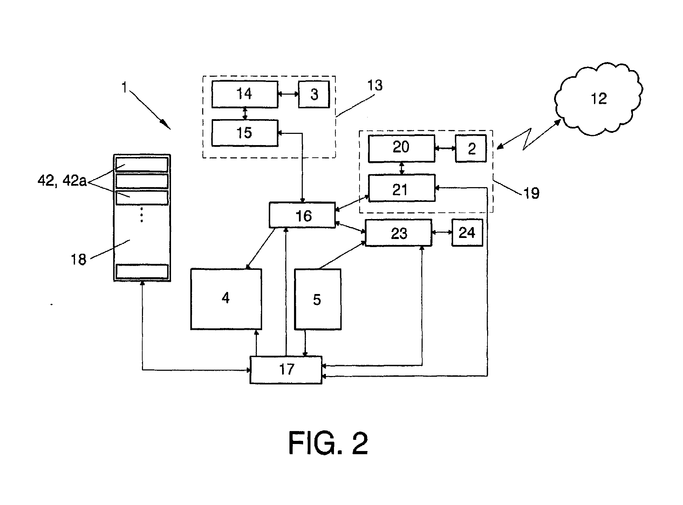

The configuration of the mobile telephone 1 is showed in figure 2. Said mobile phone 1 is provided of an orders manager 17 which is connected to an order interpreter 16 whereby the connection between the conventional aerials 2 and 3 is made. The aerial 3 is part of a conventional short-distance radiofrequency communications module 13; comprising the corresponding receiver/emitter 14 and coder/decoder 15. Likewise, the aerial 2 is part of a conventional long-distance radiofrequency communications module 19; incorporating the corresponding receiver/emitter 20 and the coder/decoder 21.

Short-distance communications are carried out by free use radiofrequency technologies.

The orders manager 17 is connected to a memory 18 wherein a plurality of order 42 containing an identification of a controller 6, a controller key, order name and the action to be carried out by the devices 8, is stored.

The orders interpreter 16 is connected to a user key comparator 23 which in turn is connected to a memory 24 wherein a user key for requesting the introduction of the user key (personal identification number) is stored when the system requires, and which is not described in further details by being conventional.

Regarding the controller 6, this one is provided with a module for order interpretation 32 which is connected to a module for order extraction 31 whereby the connection between the controller 6 and the aerials 7 and 9 is made, for which the aerial 7 is part of the short-distance radiofrequency communications module 28 incorporating the corresponding receiver/emitter 19 and coder/decoder 30 whereby the connection to the module for order extraction 31 is made.

In addition, the aerial 9 is part of the long-distance radiofrequency communications module 39 incorporating the corresponding receiver/emitter 40 and coder/decoder 41 whereby the connection to the module for order extraction 31 is made.

Furthermore, the module for order interpretation 32 is connected to a memory 33 of data storage 43 and to an interface 34 whereby the connection to different devices 8 to be operated, is made.

The module for order extraction 31 is also connected to key comparator 37 of the controller 6, which is connected to a memory 38 wherein the key of the controller 6 has been previously introduced.

The orders 42 stored in the memory 18 are associated to the identification of the mobile telephone in order to know who sends an order, and optionally to the request of a user key for its verification using the modules 23 and 24 as mentioned. The order 42 can also be associated to an identifier of the server for managing orders and accesses 10, in order to allow carrying out different communications between the components of the system.

Thus, using the keyboard 5 the user can go through different orders 42 stored in the memory 18 which are visualized in the screen 4 using the orders manager 17, so that the user can select the order that desires to send to one of the devices 8. It should be noted that the order can be also selected by voice through a microphone, and through a voice recognition module (not shown).

Also, different orders 42 which are visualized in the screen 4 can be expressed using a speaker (not shown).

When a user selects an order, the orders manager 17 detects it and passes it to the orders interpreter 16 for sending it through the short-distance radiofrequency communications module 13 to the controller 6; so that said order is received by the short-distance radiofrequency communications module 7 of the controller 6.

The coder/decoder 30 of the communications module 28 delivers the order to the module for order extraction 31, extracting the identification key of the controller and delivers it to the comparator 37 for comparing the key stored in the memory 38 once received, so that in the case that both keys agree, it delivers the order to the module for order interpretation 32, which detects the action to be carried out, and determinates the device whereat it should be performed by accessing to the data 43 of the memory 33. Otherwise, the sent order is denied sending back a message indicating that the order has been denied, which is showed in the screen 4 of the mobile telephone 1.

When the identification key of the controller is correct, the module for order interpretation 32 detects the device on which the action has to be performed and operates the corresponding device for carrying out the required action through the manager 34.

The basic functioning of the invention which is based on the invention patent No. 200502971 has been described until this point. Next the novelties incorporated in the invention are described.

The first novelty of the invention lies in the fact that special orders 42a are stored in the memory 18, containing information relating to a user management mode, adding a more prior control to the execution of an order in the controller 6.

This new mode contains information on the user management mode, which can be the following:
- Management without user control,
- Management with user control,
- Management for user registration,
- Management for user deregistration.

For that it is necessary that the special order 42a is associated to a user identification number for the three last management cases, i.e. when management with user control, for user registration or deregistration is carried out.

In this way, each time a mobile telephone 1 sends a special order, reaches the module for order extraction 31, which is further connected to a module for controlling special orders 25, so that when the module for order extraction 31 detects that it is a special order, delivers it to the module for controlling special orders 25 determining the content of the information relating to a user management mode, and which is further connected to a control memory 26 for storing the user number identifiers, associated to the identification of each mobile telephone 1, so in the case wherein the received special order 42a is an order without user management, and the module for controlling special orders 25 be programmed for working with user management, or if an order is received indicating that user, registration or deregistration management has to be made, and the module for controlling special orders 25 is programmed for working without user management, the sent order is denied sending back a message indicating that the access has been denied through the short-distance radiofrequency communications module 28, which is shown in the screen 4 of the mobile telephone.

On the contrary, if the received special order 42a indicates that a user, registration or deregistration management has to be made and the module for controlling special orders 25 is programmed for working with user management, the module for order extraction 31 passes the information of the user number identifier and the identifier of the mobile telephone 1 to the module for controlling special orders 25 and proceeds as follows:
- If the user management mode is a user registration, the module for controlling special orders 25 stores the user number identifier associated to the unique identifier of the mobile telephone 1 in the user control memory 26. If for this user number identifier, a unique identifier of mobile telephone already exists, replaces it for one new, so that problems in changing the mobile which can be done by the user are avoided. Then the module for order extraction 31 is informed for continuing the process of executing an order 42 or special order 42a in the module for order interpretation 32 in the already described manner.
- If the user management mode is with user management, the module for controlling special orders 25 checks if the user number identifier in the memory of user control 26 has associated the same unique identifier of the mobile telephone received by the module for order extraction 31. If agree, it informs the module for order extraction 31 for continuing the process of executing the order in the module for order interpretation 32. Otherwise, the sent order is denied sending back a message, which is visualized in the screen 4 of the mobile telephone.
- If the user management mode is a user deregistration, the module for controlling special orders 25 deletes the unique identifier of the mobile telephone associated to the received user number identifier from the memory of user control 26, and informs the module for order extraction 31 for continuing the process of executing the order in the module for order interpretation 32 in the already described manner.

Additionally, the invention forecasts that the orders 42 and the special orders 42a can be introduced in the mobile telephone from another mobile telephone or from the server for managing orders and accesses 10.

For that it can receive the orders 42 and special orders 42a associated to a information relating to the forwarding the received order or the storage said order in the storing means 18 though the long-distance radiofrequency communications module 19, the information is interpreted in the module for orders interpretation 16 and based on the interpretation made, directly sends the order 42, 42a to a controller 6 o stores it in the storing means 18, through the orders manager module 17.

Therefore, the invention forecasts the possibility of storing orders 42, 42a received by the communications network 12 and which has been previously created in the server for managing orders and accesses 10 or which are stored in another mobile telephone 1 according to which was already described. In this point, it should be noted that the special orders 42a are only sent from the server for managing orders and accesses 10. Also, it allows that the order 42, 42a be directly sent to the controller 6 without being stored in the memory 18.

So, when the module for orders interpretation 16 passes an order 42, 42a to be transmitted via the short-distance radiofrequency communications module 28, if the order is of a type with user control and it is a registration, when the controller 6 receives the reception confirmation notifies the orders manager 17 that modifies in the memory 18 that the order 42a is with user management. Otherwise, if it is deregistration, when the controller 6 receives the reception confirmation notifies the orders manager 17 that deletes said order in the memory 18.

Therefore, the orders manager module 17 allows selecting an order 42, 42a of the memory 18 and selecting whether forwarding the received order 42, 42a o storing the same, in any of both cases requests via the screen 4 introducing the mobile telephone identifier destination of the order 42, 42a in the communications network 12, such as can be the telephone number or IP address, etc.

Subsequently, the server for managing orders and accesses 10 is described, which comprises a first distant communication radiofrequency module 49 with the communications network 12, for communicating with the mobile telephones 1 and with the controllers 6.

Also, it comprises a second communication radiofrequency module 44 which is connected to a second long-distance communications network 22, so that the access to the server for managing orders and accesses 10 is allowed using a user facility 11 and through said second communications network 22. The user facility 11 can be a computer or any other apparatus allowing performing these functionalities.

Thus, a user can introduce data in the server for managing orders and accesses 10, data which are related to the orders 42, special orders 42a, and a user identification number associated to each order, and indicating of whether this data should be stored or sent.

In case of being a non registered user, this is detected by the user identifier module 45 which passes the data to the second orders manager 47 wherein the mentioned data are introduced and sent to a mobile telephone 1 or to the controller 6 via the orders transmitter 48 and through the first communication radiofrequency module 49.

If by the contrary is a registered user, is detected by the user identifier module 45 which requests a user identification, that when received is verified if it is correct by acceding to the memory or registered users 46, and in case of being affirmative passes the data to the second orders manager 50, so that he/she can register orders 42, 42a which are stored in an orders memory 51 associated to the user who has registered them.

Likewise, he/she can eliminate orders 42, 42a previously stored in the memory 51 and assign or unassign orders 42, 42a to mobile telephones, i.e. defining which mobile telephones are going to have access for executing this entire order. In the cases wherein the controller 6 functions with user management, the user number identifier of the mobile telephone assigned to that controller 6 is also assigned.

In addition, the access or authorization restrictive conditions of the orders 42, 42a to the mobile telephones based on dates, hours, access numbers, etc., are allowed to be defined, so that these conditions are stored in the orders memory 51.

On the other hand, the server for managing the orders and accesses 10 allows authorizing or not the execution of an order 42, 42a, for which whether the mobile telephones 1 or the controller 6 are in communication using the communications network 12 for checking that the mobile telephone 1 is authorized to execute that order in that time. For that, the information of the order 42, 42a and the mobile telephone identifier are transmitted, which are received in a accesses module authorizer 52 that checks in the orders memory 51 if it is authorized, and communicates it to the telephone mobile 1 or to the controller 6 before executing an order.

Furthermore, the registered user can visualize the accesses or attempts of accesses for which the accesses authorizer 52 is connected to an accesses memory 54 which in turn is connected to an accesses finder 53 which is joint to the user identifier 45, so that a registered user, upon verifying his/her identity, can access to the accesses finder 53 thus accessing to the accesses memory 54, wherein all the accesses made are recorded, observes the data of each authorization/unathorization, which the accesses authorizer 52 has previously recorded in said accesses memory 54.

Additionally, the server for managing orders and accesses 10 is provided with a manager for downloading codes 55 which is connected to a download codes memory 56, in order to allow receiving code download messages, which are sent from a mobile telephone 1 containing the identifier of the controller 6, the type of order, the download code and the unique identifier of the mobile telephone, so that when the first radiofrequency module 49 receives a code download message passes it to the download manager 51, wherein the existence of the download code is checked in the download codes memory 56. If the download code 56 does exist, passes to the orders transmitter 48 the information necessary for sending the order to the mobile telephone. If the download code 56 does not exist, a message is sent to the mobile telephone notifying the impossibility for sending the order and deleting the download code from the download codes memory 56, so that for example a user can charge by each download made.

Next, a possible example for using the system of the invention is described, for a case wherein a installation exits wherein a controller 6 has been located for opening a door wherein a management with user control is carried out, for which the controller 6 has previously be connected to the opening system of the garage automatic door and programmed for carrying out the management with user control, such as explained before.

A user must exist in this case, as can be for example, the garage administrator of a neighbor community, who carries out the user management through the server for managing orders and accesses 10, for which the administrator should be authorized to access to it, for that he/she must know a code stored in the orders memory 51.

In this way, the administrator is connected using a computer 11 and through the second communications network 22, as can be for example internet, to the server for managing orders and accesses 10 and after requesting the user identification number using the user identifier 45, when verifying that it is correct, several options appear in the screen, so that in the first instance, he/she must register the controller 6, for that introduces a name for identifying it, for example, garage of a concrete street, and then the server for managing orders and accesses 10 is identified that the controller 6 has to work with user control and introduces the unique identifier of the controller 6 for its identification in the short-distance communication network.

Next, he/she registers the orders 42, 42a associated to the controller 6 according to the devices which has connected thereto, this case relates to an order of relay pulse type which can be, for example assigned by the "open garage" name.

Then, he/she must register the authorized users for opening this door, so that he/she introduces an identifying name for example, "45 square", and a user number identifier is associated to it, for example the "user number 17" of this receiver and the mobile telephone number which will be authorized. All of this data remains registered in the orders memory 51 and then an authorization order is sent to a user of a mobile telephone 1, so that the user registered before will select the order of open garage and will sent it, so that the server for managing orders and accesses 10 sends a short message to the mobile telephone 1 of the user with a user registration order for the controller 6. At this point the user of the mobile telephone 1 could see the new order "open garage" in the order list of his/her telephone 1 which remains stored in its memory 18.

Accordingly, when the user is next to the door and selects this order, he/she can sent it by Bluetooth, i.e. through the short-distance network, therewith the door will open and the controller 6 store his/her Bluetooth address and associate it to the user number 17, being all registered in the memory 33.

Therefore, no other mobile telephone with a different Bluetooth address could open this door with that user number.

## Claims

1. WIRELESS CONTROL SYSTEM USING AN APPARATUS WITH A MOBILE PHONE, wherein the apparatus with a mobile telephone (1) comprises a distant communication radiofrequency module (19), through at least one long-distance communications network (12), a short-distance communication radiofrequency module (13) for communicating with at least a controller (6), which is provided with a short-distance radiofrequency module (28) and which is connected to a plurality of device (8); orders (42) storing means (18) containing an identification of a controller (6), a controller key, order name and the action to be carried out by the devices (8); a module for orders interpretation (16) and an orders manager module (17), for allowing a user to select an order (42) and send it together with an identification of the apparatus with a mobile telephone to the controller (6), which comprises a module for order extraction (31) which receives different orders (42) and delivers them to a module for orders interpretation (32) which accesses to some data (43) storing means (33) and acts on the devices according to the indicated action; is **characterized in that**:
- The orders (42) storing means (18) store special orders (42a) containing information relating to a user management mode associated to each order (42); said information being selected among management without user control, management with user control, user registration management and user deregistration management; so that the last three management modes are associated to a user identification number; in order to send special orders (42a);
- The module for order extraction (31) of the controller (6) is connected to a module for controlling special orders (25) which determinates the content information relating to a user management mode and that is further connected to a control memory (26) for storing user number identifiers associated to an identification of an apparatus with a mobile telephone, so that in the case wherein it detects that is a user control or it is a deregistration of a user, verifies if the received user number identifier and identification of the apparatus with a mobile telephone (1) agree with the user number identifier and identification of the apparatus stored, executing the associated special order (25) in the affirmative case, and further deleting from the control memory (26) the user number identifier and the identification of the apparatus with a mobile telephone in the case of a deregistration; with the particularity of storing the user number identifier associated to the identification of the apparatus with a mobile telephone in the case of a registration and executing the associated order.

2. WIRELESS CONTROL SYSTEM USING AN APPARATUS WITH A MOBILE PHONE, according to claim 1, wherein that the apparatus with a mobile telephone (1) receives orders (42) and special orders (42a), through the long-distance communications module (19), associated to an information relating to the forwarding of the received order (42) or special order (42a), or relating to the storage of said order (42), or special order (42a) in the storing means (18), which are interpreted in the module for orders interpretation (16) and based on the interpretation made, directly sends the order (42), or special order (42a) to a controller (6) or stores it in the storing means (18), through the orders manager module (17).

3. WIRELESS CONTROL SYSTEM USING AN APPARATUS WITH A MOBILE PHONE, according to claim 2, wherein the orders (42), or special orders (42a) received by the apparatus with a mobile telephone through the long-distance communications module (19), come from another apparatus with a mobile telephone or from a server for managing orders and accesses (10).

4. WIRELESS CONTROL SYSTEM USING AN APPARATUS WITH A MOBILE PHONE, according to claim 3, wherein the special orders (42a) are sent to the apparatus with a mobile telephone from the server for managing orders and accesses (10).

5. WIRELESS CONTROL SYSTEM USING AN APPARATUS WITH A MOBILE PHONE, according to claim 4, wherein the server for managing orders and accesses (10) comprises a first distant communication radiofrequency module (49) with the long-distance communications network (12), to be communicated with the apparatuses with a mobile telephone (1) and with the controllers (6); a second distant communication radiofrequency module (44) with a second long-distance communications network (22) to be communicated with a user facility (11); a first orders manager (47) for the user introducing data relating to orders (42), special orders (42a), a user identification number for each order (42), special order (42a), and indication whether said data should be stored or forwarded; an orders transmitter (48) which is connected to the first distant communication radiofrequency module (49) for sending said data to an apparatus with a mobile telephone (1) or to a controller (6).

6. WIRELESS CONTROL SYSTEM USING AN APPARATUS WITH A MOBILE PHONE, according to claim 5, wherein the server for managing orders and accesses (10) further comprises a user identifier module (45) which is connected to a memory (46) of registered users; a second orders manager (50) which is connected to an orders memory (51) and to the orders transmitter (48), for requesting a user identification, which when being received is verified and, if it is correct stores the information associated to the user identification, and/or sends the information to an apparatus with a mobile telephone (1) or to a controller (6), when receiving the data introduced by the user, stores the information associated to the user identification.

7. WIRELESS CONTROL SYSTEM USING AN APPARATUS WITH A MOBILE PHONE, according to claim 6, wherein the second orders manager (50) comprises means for detecting registration, deregistration, assigning/unassigning the information stored in a apparatus with a mobile telephone, as well as the detection of usage restrictive conditions of said apparatuses with a mobile telephone (1).

8. WIRELESS CONTROL SYSTEM USING AN APPARATUS WITH A MOBILE PHONE, according to claim 7, wherein the usage restrictive conditions comprise restrictions relating to dates, hours, and allowed accesses.

9. WIRELESS CONTROL SYSTEM USING AN APPARATUS WITH A MOBILE PHONE, according to claim 5, wherein the server for managing orders and accesses (10) further comprises a manager for downloading codes (55) which is connected to a download codes memory (56) comprising an order and a download code, coming from an apparatus with a mobile telephone (1), for when verifying that the download code of codes agrees with the one stored, sends the order (42), or special orders (42a) using the orders transmitter (48) to the apparatus with a mobile telephone, and deletes the checked download code from the download codes memory (56).

10. WIRELESS CONTROL SYSTEM USING AN APPARATUS WITH A MOBILE PHONE, according to claim 8, wherein the server for managing orders and accesses (10) further comprises an accesses authorizer (52) which is connected to the first long-distance radiofrequency module (49), to the orders memory (51) and to a accesses memory (54), in order to receive a request of whether the apparatus with a mobile telephone (1) is authorized to access to the device (8) before an order (42), or special order (42a) being executed, from the controller or else from the apparatus with a mobile telephone (1), storing the authorizations/unauthorizations made in the memory of access (54).

11. WIRELESS CONTROL SYSTEM USING AN APPARATUS WITH A MOBILE PHONE, according to claim 8, wherein the server for managing orders and accesses (10) further comprises an access finder (53) which is connected to the second orders manager (50) and to the accesses memory (54), in order to allow a registered user visualizing the stored authorizations/un authorizations through the user facility (11).
